(19) **Europäisches Patentamt / European Patent Office / Office européen des brevets**

(11) **EP 2 151 799 A1**

(12) **EUROPEAN PATENT APPLICATION**

(43) Date of publication:
**10.02.2010 Bulletin 2010/06**

(51) Int Cl.:
**G06Q 30/00** (2006.01)

(21) Application number: **08161681.5**

(22) Date of filing: **01.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
- **Neptuny S.r.l.**
  **20129 Milano (IT)**
- **Politecnico di Milano**
  **20100 Milano (IT)**

(72) Inventors:
- **Cremonesi, Paolo**
  **20134, Milano (IT)**

- **Turrin, Roberto**
  **21020, Mornago (VA) (IT)**
- **Violante, Fabio**
  **20135, Milano (IT)**
- **Visconti, Stefano**
  **21030, Casalzuigno (VA) (IT)**

(74) Representative: **Faggioni, Carlo Maria et al**
**Fumero**
**Studio Consulenza Brevetti Snc**
**Pettenkoferstrasse 20-22**
**80336 Munich (DE)**

(54) **Recommander method and system, in particular for IPTV**

(57)    A method and a system for providing a recommendation to a user amongst a plurality of items is disclosed. The method comprises the steps of
storing in a memory at least content data of the items and user data;
implementing a recommendation model;
applying to said content data said model for establishing a ranking of said items on the basis of a user profile of a user detected through a detecting device;
and, providing a plurality of item recommendations on display means based on said ranking to the user, wherein said content data and user data are stored as a dataset made up of content data of the item (ICM), user data and ratings (URM);

during a batch process
a plurality of potential models are construed, from candidate models representing different recommendation models, on the basis of a dataset analysis and partitioning, and then tuned and evaluated in correspondence of a plurality of class of users resulting in a usable model for each of the class of users
said usable models are selected and stored in said memory,
and, during a real-time process, said usable models are chosen upon detection of the class of user of the current user and used to obtain a ranking of recommended items to be supplied to the current user.

Fig. 2

## Description

Field of the Invention

The present invention relates to a recommender system and method, in particular to a recommender method for a plurality of items to be purchased by users, such as within the framework of IPTV.

Background of the Invention

Recommender systems attempt to predict items (e.g. movies, music, books, news, web pages, ...) that a user may be interested in, given some information about his/her profile. How much an item interests a user is called relevance. Thus, a recommender system estimates the relevance of a user based on a collection of items. Such information is especially useful in situations where the number of items is continuously growing (for instance, the huge amount of contents available on broadcast channels) and the amount of relevant data is relatively low.

These systems recommend the user on the basis of a model of the user profile, i.e., his tastes, interests or attitudes. Thus, for example, if the item collection consists of movies and the user to recommend is a baby, the system will propose a list of cartoons because the baby's profile somehow matches with cartoons and it does not match with horror or action movies.

Recommender systems have become an important research area since the mid-1990s. There has been much work done both in the industry and in academia on developing new approaches to recommender systems over the last decade. The interest in this area still remains high because of the abundance of practical applications that help users to deal with information overload and provide personalised recommendations, content, and services to them.

Recommender systems are particularly successful in commercial applications: well-known examples include recommending books, DVDs/CDs, and other products at Amazon.comTM, music on Pandora.comTM and movie renting by NetflixTM. Other potential domains include VOD (Video On Demand) and IPTV (IP Television), which will certainly take advantage of recommender technologies, even though, so far, acclaimed applications on it are not available on the market.

The IPTV infrastructure offers the application to exhibit an almost unlimited number of 'products' (movies, channels, ...). As the universe of available products increases, each item enjoys less and less visibility. The consequence is that users are scarcely stimulated in purchasing, not because the desired products are not present in the catalogue, but rather because users are not able to find them.

The solution could be to provide the user with a fast and efficient keyword-based search tool. Unfortunately, not all domains are suited to such a solution. For example, IPTV users typically use a remote controller to browse the available channels, movies, etc. Thus, they could not easily perform a research based on keywords. Furthermore, the solution would require customers to know in advance what they are looking for, but this is not always the case: very often customers have a very vague idea of what they are exactly looking for, or they find it hard to express their needs by means of keywords. In addition, keyword-based search engines make user only find what they are seeking, preventing, for example, impulsive shopping, a very powerful leverage of sales.

In this field, the key is represented by personalised systems, able to recommend products which actually fit the specific user needs, i.e., recommender systems. The broadcasting of movies, TV channels or general multimedia contents, can benefit from such technologies. The integration of a recommender system is much more feasible and useful into an IPTV infrastructure than in a traditional system. In fact, IPTV allows user interactions not allowed in ordinary television, resulting in an inestimable added value which concerns, for example, platform usability, provider image and so on.

On the other hand, IPTV architectures have some specific issues which are not present in other domains. Amongst them:

(i) the dynamic nature of the universe of resources (e.g., movies and TV programs),
(ii) the resulting spatial and computational complexity,
(iii) the difficulties in inferring the relevance of items,
(iv) the peculiar ways in which users interact with the platform (i.e., using a remote controller and not a keyboard or a mouse).

Similarly to many other domains, the collection of items in the IPTV domain is quite heterogeneous and continuously growing. VOD contents can be considered relatively easy to be treated. The recommender engine computes their relevance and then chooses some of the movies to be suggested to the customers, and users can opt to watch them whenever they want. More questions arise in IPTV services which broadcast resources such as traditional television programmes (e.g., talk shows, documentaries, sports events, movies, etc.), which are time-scheduled, therefore available in the platform only in prefixed time slots. Consequently, the recommender must be able to punctually verify the relevance of such resources, and be able, if necessary, to recommend them on time (i.e., before resources expire). The point is not just the simple setting of a constrained time period where the recommendation is active: according to the methods available in the prior art, some difficulties can result both due to the methodology chosen (i.e., it is a problem intrinsic in the specific algorithm class) and due to computational feasibility (i.e., it is too complex a problem to be computed on time).

Related to such problem, computational complexity is a question which is real for most recommendation systems, when applied to real datasets. Indeed, the IPTV domain may consist of millions of users, as much as of resources. When customers access the platform, they must receive recommendations in a short time (e.g., at most few seconds), thus the algorithm must be able to scale well as the domain size grows. Similarly, even spatial complexity (i.e. memory requirements) can be a problem: keeping in memory (RAM) a one-million per one-million matrix (even though it is likely to be sparse) may be challenging.

The way users interact with IPTV platforms allows to obtain useful information about their actions, such as what a user watched and when, the amount of time a user spent watching a specific movie, and so on. Unfortunately, only a small amount of such information is suitable to describe a user and to acquire his or her profile. Indeed, in many systems the only information available is the list of resources a user watched (usually even a temporal indication of the time spent watching such movies), although this list is a poor indicator about the true interest of the user for such movies.

The aforementioned information about the user interaction allows the definition of a user model. Such model is built on the basis of a number of features of the users (for example collected at a registration stage) and a feedback provided by the user about the appreciation (i.e. the relevance) of the movies that he or she watched. The feedback can be either (i) implicit, i.e. as stated above, the system implicitly infers the profile by observing the user's behaviour, or (ii) explicit, i.e. the user is explicitly asked to judge a movie or other items.

For this purpose, users are sometimes provided with specific set-top boxes through which a sort of active audit can be performed. By means of explicit feedback, judgments by users about a few resources they interacted with can be obtained. For instance, after a user have watched a certain television programme, the system might ask to express a rating. Despite it being possible to gather quite accurate rating information, such systems are often perceived as being invasive by the user, and can collect feedback only for very few items (e.g. only for the movies a user decided to provide a judgment about). Furthermore, such systems being quite intrusive, users might become upset and sometimes provide hurried random evaluations.

On the other hand, implicit feedback bears only an indirect relationship to the user's assessment concerning the relevance of any individual item. However, because it can be collected ubiquitously, its potential impact might ultimately be even greater than that of explicit feedback. For instance, it can be assumed that, if a user bought a movie, he or she will consider that movie relevant (which is equivalent to assign a high rating to that movie).

Typically, IPTV platforms gather implicit information about user tastes, sometimes integrated with a few ratings/ evaluations explicitly expressed by users. The implicit ready-to-use data represents the user's actions in a binary form

$$\mathrm{URM}_{ij} \begin{cases} \neq 0 \text{ if user } i \text{ watched movie } j \\ = 0 \text{ otherwise} \end{cases}$$

Together with the information about the user interactions with the IPTV or VOD system, few movie and TV programme characteristics, such as the title, the cast, the director(s), the genre(s) and a brief summary can be obtained. This information is often useless in explaining the relevance of a movie for that user.

A final problem is common of several IPTV architectures. Users generally access IPTV services by means of an interactive set-top box. The point is that different users, e.g. all family members, utilise the same box. The consequence is that the box collects aggregated interactions, without the possibility of discriminating among the movies watched by the individual users. The profile so acquired is a cumulative model of all the users using the platform. This issue might lead to very poor accuracy of any recommending algorithms because the profiles are only a weak model of the real preferences of each single user.

The simplest way to suggest items to users is by means of a non-personalised system, which uses popularity information, such as people's ratings or sales data, and recommends items with the highest average rating (e.g., providing a list of the top-10 most popular movies). While this is a very easy task, the users are presented with a general (non customised) list of items which may be irrelevant to them.

Other solutions work by tailoring the recommendations to demographic information about the user (e.g. age, gender, area code, preferred category, ...). The system recommends items that are preferred by users sharing the same demographic data. This is a rough example of the recommender class later referred to as "collaborative" recommender. By means of such information, new users can get recommendations without providing preference information, but just by associating their demographic information to some other known user profiles. However, highly personalised recommendation cannot be achieved because of the exiguity of data about user profiles. Moreover, privacy regulations may prohibit access to demographic information.

All the above recommending methods are negatively affected by sparsity. Sparsity is a measure of the percentage of empty cells (null value) compared to those having a significant value in a matrix of data. When sparsity is high, the execution of queries on large matrixes implies serious performance problems. Various approaches exist to face this problem (for example the application of SVD, Singular Value Decomposition, to the matrix), but in general they require remarkable resources in terms of space (in the memory and on the disk) and time.

Therefore, according to the different frameworks, it has already been suggested to use two different approaches, known as "content-based" and "collaborative filtering", which can effectively provide customised recommendations based on user preferences.

### 1.1 Content-based Filtering

The content-based approach to recommendation has its roots in the information retrieval field. A content-based system is based on the analysis of the content of the items. The model of an item consists of a set of features representing its content.

The assumption underlying the content-based techniques is that the meaning and relevance of items may be captured by such features:

- each feature has a weight assigned to it which indicates how representative such feature is for an item
- similar items contain similar features
- the more items a feature contains, the less representative the feature is (i.e., it is less important to distinguish an item).

Feature extraction may be a challenging task in IPTV, where resources are non-textual, such as audio/video streams. For instance, the features of a movie may be the genre, the cast of actors, etc. It can also be assumed that similar movies are likely to feature the same actors and to belong to the same genre.

Content-based systems recommend items similar to those that a user liked in the past. For example, the system analyses the movies that a user liked in the past and constructs a model of the user, whose features are the actors, the producers, the genres, the directors, etc., that such user prefers. Then, those movies that have a high degree of similarity to the user's preferences will be recommended. A very trivial example is that if a user watched (and hence liked) many action movies, then he will be recommended other action movies.

The main pro of content-based techniques is that, since they are based on evident resource features, they can provide an understandable explanation of recommended items. Furthermore, content-based filtering is based on a well-known and mature technology.

On the other hand, content-based techniques have several limitations, mainly due to the nature of the information utilised for recommendations.

A first issue is represented by the new-user problem, which is common to all kinds of recommender systems. In fact, new users have no profile, so no personalised list of items can be recommended to them. Moreover, recommenders are able to present reliable recommendations only if the user preferences have been correctly modelled, and the accuracy of the model will increase with the number of movies rated by the user. Therefore, a novice user, who has very few ratings, might not receive trustworthy recommendations.

In the following, we will use the term "long-profile" to denote a user profile with a large number of ratings (such a profile can be represented with a vector having a large number of non-zero elements, typically more than twenty). Similarly, we will use the term "short-profile" to denote a user profile with a small number of ratings.

Furthermore, in a content-based recommender, the system can usually only recommend items that match highly against a user's profile (i.e., the user is limited to being recommended items that are extremely similar to those already rated). This problem is referred to as overspecialisation. By contrast, ideally, the user should be presented a range of options and not a homogeneous set of alternatives.

Content-based techniques perform well in terms of relevance (to the user's interest) if items can be properly represented as a set of features. Consequently, the content must either be in a form that can be parsed automatically by a computer (e.g. text) or the features should be assigned to items manually. While information retrieval techniques work well in extracting features from text documents, some other domains like IPTV have an intrinsic problem with automatic feature extraction.

A final problem related to content analysis is that, if two different items are represented by the same features, they appear to be equivalent. Thus, for example, content-based systems cannot distinguish between a valuable movie and a bad one if, for example, they have been shot by the same director or they have the same cast of actors.

*1.2 Collaborative Filtering*

In contrast to content-based methods, collaborative systems try to suggest items to a particular user on the basis of preferences of other users. In fact, in everyday life we often rely on recommendations from other people, such as by word of mouth or movie reviews. Such systems use the opinions of a community of users to help individuals in identifying more effectively content of interest. Collaborative systems assist in and enhance this process. They are based on the following two assumptions:

- groups of users with similar tastes will rate the items similarly; for a certain user, users similar to him or her are referred to as his "neighbourhood";
- correlated items are rated similarly by a group of users; this latter concept of correlation states that whatever the content of a item, such item is considered somehow similar to another one because the community expresses the same evaluation for both items.

Starting from the previous two points, we can derive two classes of collaborative filtering, the "user-based" and the "item-based", respectively (Jun Wang, Arjen P. de Vries, and Marcel J. T. Reinders. Unifying user-based and item-based collaborative filtering approaches by similarity fusion. In SIGIR '06: Proceedings of the 29th annual international ACM SIGIR conference on Research and development in information retrieval, pages 501-508, New York, NY, USA, 2006. ACM Press). Both of them produce a recommendation based on the social trend of interactions with the resource collection.

It should be noted that collaborative recommendation, however, does not need to extract any features from the items, it just observes the community behaviour. Thus, such systems do not have the same shortcomings of content-based systems. In particular, since collaborative systems use the preferences of other users, they can deal with any kind of content. Furthermore they can recommend any item, even the ones with a content which does not correspond to any item previously liked.

The main drawback of collaborative systems is that, in addition to the new-user problem, they are affected by the new-item (or first-rater) problem. In fact, since such systems recommend the items most preferred by the user's neighbourhood, a new item will not be recommended to anyone because nobody has rated it until then. By contrast, the content-based recommender is not affected by such a problem because a new item enter the collection with its own set of features.

The second issue is the above-cited sparsity problem. In fact, the effectiveness of the collaborative system depends on the availability of sets of users with similar preferences: unfortunately, in any recommender system, the number of available ratings is usually very small compared to the number of ratings still to estimate. As a consequence, it might not be possible to recommend someone with unique tastes, because there will not be anyone enough similar to him or her.

As a consequence of the above two points, at the beginning of its activity, a brand new collaborative system will not be able to provide accurate recommendations: this problem is referred to as the "cold start problem". In addition, since popular items are the most rated, collaborative recommender systems are likely to be biased towards the most popular items.

The object of the present invention is that of solving the above-mentioned drawbacks, supplying a recommender system which is as effective as possible, in particular in the specific context of IPTV.

Such object is achieved by means of a system and a method as disclosed in its essential terms in the attached claims.

Brief Description of the Drawings

Further features and advantages of the system according to the invention will, however, be more evident from the following detailed description of preferred embodiments of the same, given by way of example and illustrated also with the help of the accompanying drawings, wherein:

fig. 1 is a diagram showing the basic framework of the system architecture of the invention;
fig. 2 is a diagram showing in detail the outline of fig. 1, highlighting the modelling operations according to the invention; and
fig. 3 shows an exemplifying ROC (Receiver Operating Characteristic) curve of the assessment of the trade-off between the two metrics.

Detailed Description of a Preferred Embodiment

The main contributions to the system of the invention relate to the system architecture and to its multi-model implementation.

As far as the system architecture is concerned, it must be noted that the recommender is divided into two asynchronous stages: the model generation (batch) and the on-line recommendation (real-time). The model consists of the set of information needed for recommending a user. The model generation is the most demanding operation, both in terms of memory and computing requirements. For this reason it is delegated to batch execution. A significant advantage achieved is in fact that of moving as many operations as possible to this part in order to ease up the on-line (or runtime) step. In fact, the on-line recommendation of a user deals with rigid time-constraints and it is meant to be performed in real-time. Thus the on-line phase should consist of few and quick operations.

In addition, the recommender system of the invention is based on a variety of models which are built, parameterised and tested as a batch process: accordingly, the on-line recommendation is easily performed at the real-time stage using one of these models.

The approach used by the present Applicant originates from the acknowledgement that the capability of a model in recommending a user strongly depends on high-level characteristics of such user other than the ratings, e.g. gender (male/female), age, quality/quantity of information described in the profile, for instance how many items the user rated (long or short profile), the confidence level of such ratings and so on. Thus, according to the invention, depending on the detected user to be currently recommended, the model considered appropriate is selected and used for generating a list of items to propose. In substance, no single recommendation model to be applied in any circumstance has been developed, as suggested so far in the prior art, but rather a series of models tuned for each class of users.

The various candidate models may differ either in terms of the kind of algorithm implemented, or of the variable parameters chosen or the value allotted to the parameters. To this end, a methodology for parameterising, evaluating and comparing different models has been implemented.

Within this framework, we shell observe that the behaviour of most recommender algorithms depends on a usually small number of unknown parameters whose value greatly affects the quality of the recommendation. Such parameter could be, for instance, the size of the user neighbourhood to consider in user-based collaborative filtering algorithms. The most appropriate value for such parameters may depend on the particular domain or dataset, as well as on the user characteristics (e.g., length of the user profile). For the above reason, the parameterisation phase of the methodology tunes the parameters of the model in order to provide a more accurate recommendation for the selected category of users.

Each potential model, consisting of one or more algorithms of possible recommendation, is chosen from candidate models and construed on the basis of the analysis performed separately for each class of users, a class consisting of users with similar characteristics (e.g., all the users older than a certain age, or all users with more than twenty ratings). In other words, a series of different potential models is developed, whose effectiveness is tested on the individual category of users: thereby it is possible to establish, in correspondence of each class of users, what the best suited model (the so called usable model) in a series of candidate models is. Within this framework, the term "best model" for a given class of users refers to the recommender algorithm (selected among the set of available algorithms) and tuned parameter values that should be used in order to obtain the most accurate recommendation.

*1. System Architecture*

The system architecture has been designed with the following main purposes.

(i) Quality of recommendations. This means, among other things, the capability to suggest personalised items actually interesting to users;

(ii) The system must be able to recommend any user at any time. For instance, it must properly recommend a user even if his of her profile has just been updated or newly entered into the database;

(iii) Scalability and performance. Recommender systems require calculations which grow both with the number of customers and with the number of items. An algorithm that is efficient when the number of data is limited can turn out to be unable to generate a satisfactory number of recommendations as soon as the amount of data is increased. Thus, it is crucial to apply algorithms which are capable of scaling up in a successful manner with real-time response times.

(iv) Flexibility. The system may require the integration of new features or the updating of existing algorithms. The system has been originally thought to work in the setting of IPTV and VOD, but it is intended to be easily tailored to potentially any domain. Note that any algorithm which performs well in a particular domain might be inaccurate in different situations. Besides that, even accuracy in the same domain can be related to a particular dataset (characterised by the type of users and the way they interact with the platform). Thus, using a different dataset might require to replace the algorithm with an ad-hoc one (or simply tuning of the same). A flexible framework will allow an effortless update.

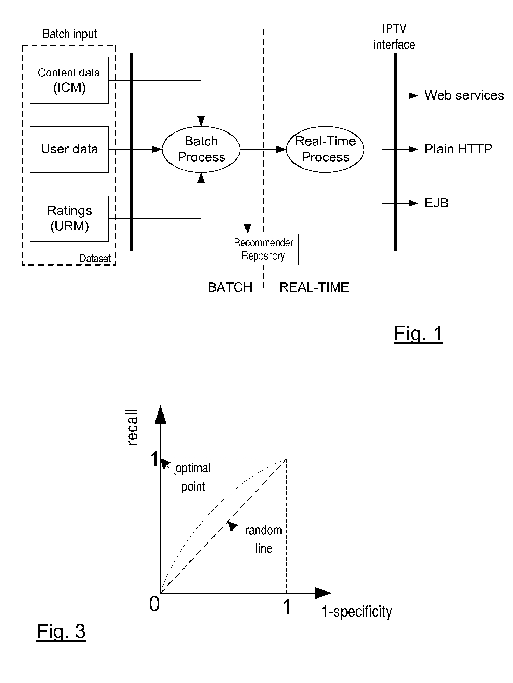

The basic framework of the system architecture is shown in fig. 1. *2.1 Batch Input*

The input data of the whole architecture consist of three main kinds of information: (i) the items (Item-Content Matrix, or ICM), (ii) the users (User data), (iii) and the relationship between users and items (User-Rating Matrix, or URM). The input data are usually referred to as the dataset.

*ICM*

The Item-Content Matrix (ICM) describes the principal characteristics of each item. It can be generated starting from an in-depth analysis of the available information about the item content. We could be faced with a lot of information, most of which typically meaningless in characterising the items. For instance, by analysing some IPTV datasets we derive the following features (referred to as metadata types) as the most meaningful for describing items such as a television show or a movie: the title, the set of actors, the director(s), the genre(s) and the plot. Other metadata have been discarded because either incomplete (e.g. not present in all the items), irrelevant or hardly usable (i.e. requiring too much effort with respect to the gain).

The information provided by the ICM may be typically used to generate a content-based recommendation. Moreover, it can be used to perform some kind of pre-processing of the items. For example the items might be filtered using the ICM data in order to eliminate the items not suitable for children (e.g. with adult content).

*User Data*

This input concerns a set of information about the user, such as the gender, the age, the occupation, and so on. These data are usually strictly confidential and are explicitly provided by the users, for example upon registration to the system.

*URM*

The User-Rating Matrix (URM) contains information concerning user interactions with the system (e.g., the ratings). The URM is the most significant information for collaborative recommenders. Each row represents a user, each column an item. Thus, the element in the ith row and jth column is the rating of user i about the item j. Such rating is null (i.e. zero) if the user has not interacted with the item or if he or she has expressed no opinion, otherwise it is a rating value, for example between 1 and 5 (1 and 5 being the minimum and maximum satisfaction, respectively).

Depending on platform capability, the user rating can be either explicit or implicit. Explicit rating provides a more accurate information than implicit rating for representing the user's actual interest in an item. The framework of the invention has been developed to exploit architectures based both on implicit and on explicit ratings, the two possibly being integrated.

The simplest form of implicit rating is represented by a binary classification. If the user has interacted with an item (e.g., what is important here is simply that then user watched a movie, neglecting for instance whether he or she paid for it or not, whether he or she terminated the viewing, etc.), a positive rating is assigned to that item, otherwise a null rating is assigned. According to a preferred embodiment of the invention, a constant value in the possible rating scale is allotted to the positive rating, which is different from the end values, i.e. the maximum and the minimum: thus, for example, the rating scale being defined across the range [1 to 5], when a user interacts with an item he receives an implicit rating equal to 4. In fact, it can only be stated that the user preferred such item among many others, without it being possible to infer any satisfaction level therefrom, and so an average positive value is assigned to said user.

The above straightforward solution can effectively work with platforms capable only of implicit rating gathering. Systems collecting explicit rating are expected to achieve better results, i.e., to be able to acquire a more accurate user profile, because users make their satisfaction known to the system. Unfortunately, the amount of data collected in such a way can be particularly poor. The main reason is that, for example, not all users will rate all the movies they watched, and, should they be forced to do that, they might assign random or hasty judgments.

Thus, the system should preferably be as little invasive as possible and leave the user the choice to provide a rating or not. When both explicit and implicit ratings coexist, user analysis can be somewhat more elaborate than simple binary classification.

According to a preferred embodiment of the invention, it is suggested to use the explicit ratings for training user behaviour analysis and inferring a more reliable user profile. Let us consider a user, for example. He or she typically stops the player before the end when watching a movie that he or she does not like, and then gives a low rating. Therefore, the next time he or she stops playing a movie before the end, the system can automatically assign a low rating.

*2.2 Batch Process*

In order to reach the object of the invention, the core of the recommendation has been divided into two asynchronous stages: the batch (off-line) one and the real-time (on-line) one.

The batch component is faced with the most expensive part of computation, as well as with the strongest memory and computing requirements. The purpose is to move as many operations as possible to this part in order to ease up the online part. In fact, the on-line component is faced with the real-time requests for recommendation coming from the client interface, with rigid time constraints.

The approach of the invention, as previously stated, is to use model-based algorithms. In other words, model-based algorithms work on a simplified representation of the dataset, called the model, rather than on the whole real data. The model is a new dataset with a greatly reduced size with respect to the original dataset, but with enough information available to be representative of the original dataset. The reduction in size is obtained by applying appropriate mathematical algorithms (e.g., single value decomposition used to remove non-significant dimensions, or frequency based techniques used to merge different data). The model generation is the most demanding operation, thus it is delegated to the batch part. Once computed a model, the on-line part can perform real-time operations to provide recommendations.

Despite such logical division of the recommending process, the model construction according to real domains can still be challenging because of the size of said domains and the related memory and time requirements. Hence, particular attention has been paid to the feasibility of the computation with actual datasets, adopting very high scalable solutions such as parallel implementations enabled to run and scale on pools of multiprocessor machines. For instance, a parallel version of the SVD (singular value decomposition) technique is implemented, optimised for sparse and large matrixes. The main purpose of SVD is to represent data in a low-dimensional space (pseudo-matrix), lighter than the original and real space both in terms of memory and time complexity. By itself, the singular value decomposition defines a model of the data, cleaning up the "noise" present and strengthening the correlation among similar information.

Although a parallel solution can reduce the time complexity of the most expensive algorithms, practical implementation is still faced with prohibitive memory requirements. For instance, a realistic URM matrix might consist of millions of rows and columns. However, such matrix is typically highly sparse. In fact, most users will have interacted with (e.g. rated, watched, bought) very few items (for some particularly active users, a few dozens or hundreds of items at most). Sparse matrixes may be treated using very efficient representations, which allow to treat more efficiently the resulting pseudo-matrixes.

Despite that, maintaining the data in the memory might still prove difficult. Indeed, in addition to the URM and ICM, which are sparse, the recommender works with other matrixes (e.g., the matrixes constituting the model) and data, which may be dense, and cannot be stored in the memory in any optimised fashion.

For such reasons, according to a preferred embodiment of the invention, it is proposed to use a solution based on a sort of memory virtualisation, similarly to the swap capability used by OSs. This means that, instead of storing a matrix entirely in the RAM, use of a storage support (e.g. a hard disk) is made, where to temporarily "park" the matrix part exceeding the physical memory. As main drawback, such solution will slow down computation, because the external support requires I/O activities whose performance is several orders of magnitude worse than memory activities. Consequently, in order to limit the data exchange between memory and storage, the virtualisation policy is defined ad-hoc for each algorithm.

In the following, examples of two model-based collaborative algorithms, implemented in order to fit the batch/real-time subdivision and to respect the system requirements are given. Each of the two algorithms represents more than one candidate models (because the algorithm behaviour depends on some parameters, and there are several possible values for such parameters). Each candidate model, in turn, is defined on the basis of the input dataset (e.g., the URM) creating a well-defined potential model. Each potential model is tested with different user profiles, in order to identify which potential model provides the most effective recommendations for a specific class of users. Each potential model identified in the previous step is referred to as usable model. At the end of the procedure, the batch part of recommender provide a set of usable models, each one tailored for a specific class (category) of users.

The collection of usable model is used by the real-time part of the recommender system. In the real-time part, whenever there is the need to provide a recommendation for a specific user, the recommender system first identify which class (category) the user belongs to and subsequently selects, among the usable models, the model associated with that particular class (category) of users. Such model is used to provide the recommendation to the user.

For the sake of simplicity, the two exemplary algorithms address the case of binary URMs (i.e. obtained through implicit ratings of users). However, for both algorithms an extension oriented to the non-binary case exists.

*First Example - Singular Value Decomposition*

The Singular Value Decomposition (SVD) is a technique for matrix decomposition. It is well known in the settings of Information Retrieval since it makes up the core of the Latent Semantic Analysis (LSA) technique (G. W. Furnas, S. Deerwester, S. T. Dumais, T. K. Landauer, R. A. Harshman, L. A. Streeter, and K. E. Lochbaum. Information retrieval using a singular value decomposition model of latent semantic structure. In SIGIR '88: Proceedings of the 11th annual international ACM SIGIR conference on Research and development in information retrieval, pages 465-480, New York, NY, USA, 1988. ACM Press. P. Husbands, H. Simon, and C. Ding. On the use of singular value decomposition for text retrieval. In M. Berry, editor, Proc. of SIAM Comp. Info. Retrieval Workshop, October 2000).

Any rectangular matrix A with size m $\times$ n (assuming suppose for simplicity's sake m$\geq$n) can be decomposed into the product of three other matrixes:

$$A \;=\; U\Sigma V^{T} \qquad\qquad\qquad 1.1$$

where U is a m $\times$ n with orthonormal columns (i.e., $U^{T}U = I$), V is a n $\times$ n with orthonormal columns (i.e., $VV^{T} = I$), and $\Sigma$ is a n $\times$ n diagonal matrix containing the singular values, sorted in a decreasing order; U and V contain the left and right singular vectors, respectively. Note that SVD is unique except for certain permutations of rows, columns or signs of the three resulting matrixes. Conventionally, the diagonal elements of $\Sigma$ are constructed so as to be all positive and sorted in a decreasing order.

The interest in SVD derives from the fact that it allows to approximate the original matrix in a reduced-dimension space. Indeed, by keeping only the first l largest singular values of $\Sigma$ (this operation is referred to as truncated SDV), it is possible to obtain three new matrixes: $U_l(m{\times}l)$, $\Sigma_l$ (l $\times$l) and $V_l$ (nxl). Multiplying these three matrixes it is obtained:

$$A_l \;=\; U_l\Sigma_l V_l^{T} \qquad\qquad\qquad 1.2$$

which is the rank-l matrix closest to A (according to the meaning of the Frobenius norm).

The major issue with SVD is its complexity, which is $O(mn^2)$.

More efficient implementations for sparse matrixes exist, whose complexity is almost linear with the number of non-zero values. Moreover, both approximate and incremental techniques exist, even though they are not exact methods.

However, the advantages of using SVD are numerous:

- it generates a low-dimension space. This allows to abide by system scalability and performance constraints.
- it reduces data noise. In fact, by neglecting the singular values with low magnitude, the less-informative data are discarded, which are typically noisy.
- it strengthens the relationships among the data. Thus, if two vectors (either users or items) are similar (because somehow related), they are represented closer to each other in the l-dimension space than in the original space. It must be noted that the relationship might also be indirect, i.e., by means of SVD, hidden dependencies among users or items may be discovered.

SVD has been integrated into the two main components of the system architecture of the invention:

- batch. The batch stage consists of performing an SVD on the URM, and of considering the l largest singular values, as expressed in 1.2. The resulting usable model consists of the matrix $V_l$, where parameter l may vary depending on the class of user considered.
- real-time. The real-time recommendation may be obtained by a simple multiplication between the user profile and the model:

$$u_{rec} \;=\; uV_l V_l^{T} \qquad\qquad\qquad 1.3$$

where u is the vector with the actual user ratings, and $u_{rec}$ is the vector of the predicted ratings. By sorting this last vector in decreasing order, the recommendation list is obtained.

*Second Example - Direct Relations*

The Direct Relations (DR) algorithm belongs to the item-based class of collaborative recommenders. The DR is a statistic-based process which aims to determine the similarity between two items by taking into consideration pairs of user ratings. In its simplest expression, the similarity between two items is the number of users who have rated both items.

The algorithm implementation consists of the following two parts:

- batch. The model consists of the similarities between pairs of items and can be represented by an item-item matrix, referred to as DR, whose elements (i, j) correspond to the similarity value between item i and item j. The DR matrix can be computed as:

$$\text{DR} = \text{URM}^{T} \cdot \text{URM} \qquad\qquad 1.4$$

This is the simplest form of DR. Other forms of DR matrix can be computed, usually normalizing each element of the original DR matrix with the corresponding elements on the diagonal.

$$\text{DR}'_{ij} = \frac{\text{DR}_{ij}}{(\text{DR}_{ij})^{\alpha} \cdot (\text{DR}_{ij})^{\beta}} \qquad\qquad 1.4'$$

The resulting usable model consists of the matrix DR', where parameters $\alpha$ and $\beta$ may vary depending on the class of user considered.

- real-time. The predicted ratings urec can be straightforwardly derived in real-time by means of the following operation:

$$u_{rec} = u \cdot \text{DR}' \qquad\qquad 1.5$$

where u is again the vector with the actual user ratings.

The recommender system of the invention has been developed as a multi-model system taking into account that, given a dataset and a recommendation algorithm:

(i) the quality of the recommendation may depend on some user characteristics, such as: (a) gender, (b) age, (c) whether the user was included in the model generation or not;
(ii) the quality of the recommendation may depend on some features of the user ratings, in particular: (a) the number of ratings (referred to as the length or cardinality of the profile) and (b) the popularity of the rated item; for instance, the accuracy of recommendation may vary dramatically due to a user preferring popular instead of unpopular items;
(iii) the same algorithm may show discording results when evaluated with different metrics (e.g., RMSE and recall); the evaluation metrics to be used should be accurately chosen according to the target of the specific system.

Observations (i) and (ii) lead to the definition of user classes. A single recommendation algorithm cannot assure high quality to all users, though overall accuracy might be quite good. According to the invention, a multi-model recommender system supported by an exhaustive quality evaluation methodology is proposed, designed to fit the peculiar profile of each user class. The models differ each other either in the kind of recommendation algorithm they include or in the choice of the configuration parameters of a same algorithm.

A recommendation list can be considered high-quality when:

(i) most of the recommended items are liked by the user.
(ii) few of the recommended items are not liked by the user.

In other words, it has been detected that it is not so important to find a metric which supplies the model most able to predict effectively the actual rating a certain user would have given to a specific item (e.g., an example of such metrics is the MAE, or Mean Absolute Error, which compute the mean absolute error between the real rating $r_{ij}$ for user i on item j and the predicted rating $r'_{ij}$ for the same user and item), but the object has rather been moved to the achievement of a good prediction of the first X items of the rating, for example the top five items.

For such specific implementation, according to a preferred embodiment of the invention it has been resorted to two evaluation metrics known in the information retrieval field as "recall" and "specificity", respectively.

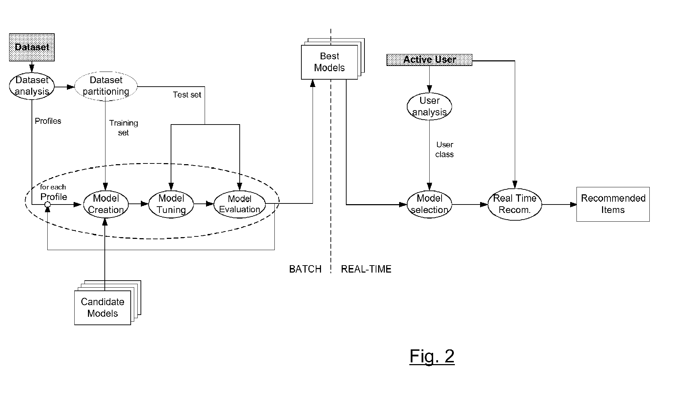

The framework of modelling operations, enclosed in the batch resource-consuming stage of the system, where the chosen metrics are used, is schematically shown in fig. 2.

According to the architecture, the batch methodology for creating a multi-model system is performed through the following five steps:

1) dataset analysis, for defining the different user and item profiles.

2) dataset partitioning, for splitting the data into two separate sets, referred to as the training and the test sets.

3) model creation, where the training set is used as a basis for creating a model.

4) model tuning, whose goal is to optimise the parameters of a model for each user class. This step is achieved by defining proper first evaluation metrics.

5) model evaluation. Here a model is tested against different user classes by computing through a second evaluation metric. This test may also differ from the tests used in the previous point. Indeed, it is important that this second metric is expressed in terms of a simple numeric value in a fixed range. In fact, by means of this metric it must be possible to select a usable model (the best model, i.e. the one apt to give a good recommendation to the user) for each user class.

*Dataset Analysis*

The statistical analysis of the dataset mainly aims to identify the user and item classes, also referred to as profiles. Thus, the user profiles are categorised according to their cardinality. For instance, users may be divided into two main groups, referred to as user profiles, by proceeding as follows:

- the users are sorted by their cardinality (in ascending order)
- the first x users of such sorted list are selected, so that their ratings represent half of the total number of ratings. This group contains short-profile users. The remaining users form the group of long-profile users.

Note that, according to the specific dataset, a group can be further split, also with alternative criteria such as gender, age and lifestyle.

As shown in fig. 2, each of these user classes (categories) is used both in the batch and real-time parts of the system. In the batch part of the system: (i) for each user category, all candidate models are tuned on the input dataset to work well on the specific user category, creating for each candidate model a corresponding potential model; (ii) for each user category, one potential model is selected among the list of available potential models; the model which is selected model is referred to as the usable model. At the end of the batch activities, each user class is coupled with one specific usable model. In the real-time part of the system, whenever there is the need to make a recommendation to a user: (i) the user profile is analyzed; (ii) the corresponding user category is found (e.g., short-profile or long-profile); (iii) the corresponding usable model is used to produce the recommendation for that user.

*Dataset Partitioning*

The partitioning of the dataset into two sets allows to separate the data used in the model generation (the training set) from the data used in the algorithm tuning and evaluation (the test set). In fact, a fair and reliable evaluation must be conducted with data not considered in the model. The partitioning methodology used is based on the k-fold cross-validation.

We evenly split the users of the URM into k separate folds. Each fold contains one $k^{th}$ of the total number of users in the URM. In order to ensure that the result is a set of users with identical statistical characteristics, we first randomly rearrange the users (i.e. the rows) of the URM. This step is referred to as scrambling. Alternatively, the same goal may be achieved by means of a process referred to as stratification, i.e. a random sampling of the users which guarantees the forming of groups of users with statistical properties compliant with all URM properties. For instance, we can create groups which respect the proportion of users in each user category.

Then, one fold is used as test set (tuning of the model and evaluation of the recommendation quality), while the remaining folds form the training set (creation of the model). Using these sets, we perform the optimisation and evaluation steps described in the following. This task is executed k times, each one with a different fold used as the test set.

It should be noted that the larger the number of folds, the more data are included in the models. The limit situation leads to a model which includes all the data but one (this is called leave-one-out test). In such a case, all models would practically be identical to one another. On the other hand, with a small number of folds (the extreme situation is with two folds) we are stressing the algorithm because the model is built on a limited amount of data. A typical trade-off value for k is 10.

*Model Creation*

Model creation consists, for each of the candidate models (i.e. different available algorithms and/or algorithms having different variable parameters), of computing a profile-specific model or usable model. Model creation uses the training set of data. The information about the profiles can be useful for further selecting some data from the training set: for example, the model could be generated by discarding users with less than 10 ratings, because they might not bring meaningful information.

For instance, if the candidate model is based on the Singular Value Decomposition algorithm, the model creation phase creates the reduced dimension matrix $V_l$ from the user-rating matrix (URM). If the candidate model is based on the Direct Relation algorithm, the model creation phase creates the similarity matrix DR'.

*Model Tuning*

Tuning of the model consists of finding the parameters of a specific algorithm which lead to high-quality recommendations. The proposed methodology is based on the k-fold cross-validation discussed above. For each among the k iterations, the training set is used for generating the model, while the test set is used for computing some suitable evaluation metrics.

The computed metrics are preferably the recall, i.e., the percentage of liked items that have been correctly recommended, and the specificity, i.e., the percentage of non-liked items that have been correctly not recommended. According to the experience gained, the latter metric has a very strong impact on the system. In fact, a user is much more (negatively) influenced when he is recommended a non-liked item, than when he is not recommend a liked item. Unfortunately, specificity can be computed only in case of non-binary ratings. In case of binary ratings, in fact, nothing can be inferred about non-liked items.

The definition of liked versus non-liked items is quite crucial in this phase. In the case of binary URMs (as the examples we submitted above), we can straightforwardly consider an item as liked if it has been rated by the user, non-liked in the other case. In the case of non-binary URM, we have more information to discriminate preferences. According to performed tests, it has been found that, given a user, a rating greater or equal to 3 (in a range from 1 to 5) and, at the same time, greater or equal to the user's average rating, refers to a liked item. Similarly, a rating below 3 and, at the same time, below the user's average rating, refers to a non-liked item. It can be noticed that some ratings are not assigned to any category, since they represent dubious cases.

In practice, the two metrics are computed as follows:

$$\text{recall} = N_{rl}/N_l \qquad\qquad 1.6$$

where $N_{rl}$ is the number of recommended liked items and $N_l$ is the number of liked items

$$\text{specificity} = 1 - NT_{rl}/NT_l \qquad\qquad 1.7$$

where $NT_{rl}$ is the number of recommended non-liked items and $NT_l$ is the number of non-liked items.

The trade-off between the two metrics can be evaluated, for instance, by using a ROC (Receiver Operating Characteristic) curve, like the one shown in Fig. 3, and the relative metric, such as the AUC (Area Under Curve). The x-axis represents the "fall-out", defined as the complement to specificity, while the y-axis represents recall. The ideal case is when both recall and specificity are equal to 1. The random curve corresponds to a classifier which randomly classifies an item as liked or non-liked.

Starting from recall and specificity, we could even compute an aggregate metric, such as the f-measure:

$$\text{f-measure} = 2\text{recall}/[\text{recall} + (1 - \text{specificity})\ c + 1] \qquad\qquad 1.8$$

where c is a constant representing the importance of specificity versus recall. For the above reasons, the value of c could be quite high, such as 10: in this case a false positive (a non-liked item that is recommended) is considered 10 times worse than a false negative (a liked item that is not recommended). The f-measure assumes values from 0 to 1.

The higher the f-measure, the higher the quality of recommendations and the better is the model for that chosen profile.

For each iteration of the k-fold cross-validation, the following is performed:

1. model M is built using the training set
2. then the test set is considered. For each user u of the test set with a profile consisting of at least two rated items:

- for each item i rated by user u:

    i. we withhold item i, i.e. we temporarily take i off the current profile;
    ii. we generate the recommended list L for $\tilde{u}$ (i.e. the user profile vector u without the items already in the user profile), using model M;
    iii. we sort L in descending order of predicted rating, and then we consider the position p of item i in the sorted list.
    iv. we consider a threshold equal to N = 5 (in any case, preferably lesser than 10). This corresponds to the number of recommended items the system typically presents to users:

    - if $p \leq N$ and i is related to a liked item, we have a true positive, i.e., recall increases.
    - if $p \geq N$ and i is related to a non-liked item, we have a true negative, i.e., specificity increases.

Still taking into consideration the SVD algorithm explained in the above first example, the aforementioned methodology would allow to search for the optimal dimension l of matrix $V_l$. Since the proposed implementation of the algorithm is for binary URM, we compute only the recall. The algorithm analysis must be conducted considering different classes of user profiles (short/long). For each user class we compute the recall for the k folds.

*Model Evaluation*

The last step of the batch stage consists of selecting the models to be included in the multi-model recommender. This operation can simply consider the results of the previous step, i.e., the recall, specificity and f-measure results, or, potentially, it could also be conducted computing an alternative metric. In fact, some metrics are suitable both for optimising an algorithm and for comparing it with alternative techniques (e.g. the recall), while other metrics are more suitable for algorithm optimisation, but not for comparison (e.g. the ROC curves). In any case, the aim is to provide a single-value metric which unquestionably defines the best algorithm, given a data-set and a category of user profiles.

The output of this phase is a set of "usable" models: each of the usable models is able to produce the most accurate recommendation for one user class, given a data-set and an evaluation metric.

*2.3 Real-time Process*

In real-time, when an active user (i.e. the user to recommend) queries the system to retrieve a list of recommended items, the process consists of the following three steps:

1) user analysis, which aims to identify the profile class of the active user.
2) model selection, based on user class profile, the best model is selected.
3) real-time recommendation, which generates the recommended item list for the active user.

*User Analysis*

User analysis examines the user in order to assign it to one of the user classes (e.g. short or long profile). This process can, for example, consider the number and kind of user ratings (e.g. a user with few ratings biased towards popular items).

*Model Selection*

Selection of the usable model is performed by choosing the model which is best suited to the active user's class. The choice depends on the model evaluation accomplished during the batch stage.

*Real-time Recommendation*

The final step of the methodology consists of using the selected model to recommend the active user. This step is indeed algorithm-dependent. Note that further processing could be performed on this recommended list, for instance due to some business strategies (e.g. a policy could push up in the list the movies coming from a certain provider).

The result of the real-time selection can then be made accessible to the user by means of a variety of interfaces, depending on the type of system which is being considered, for example display means such as an IPTV interface, or web services, or plain http on a client such as a browser.

It is understood that the description reported above is provided as a way of example and that the practical ways of implementation or the changes made by a person skilled in the field may differ without departing from the scope of protection as defined in the attached claims.

**Claims**

1. A method for providing a recommendation to a user amongst a plurality of items, the method comprising the steps of storing in a memory at least content data of the items and user data;
   implementing a recommendation model;
   applying to said content data said model for establishing a ranking of said items on the basis of a user profile of a user detected through a detecting device;
   and, providing a plurality of item recommendations on display means based on said ranking to the user, **characterized in that**
   said content data and user data are stored as a dataset made up of content data of the item (ICM), user data and ratings (URM);
   during a batch process
   a plurality of potential models are construed, from candidate models representing different recommendation models, on the basis of a dataset analysis and partitioning, and then tuned and evaluated in correspondence of a plurality of class of users resulting in a usable model for each of the class of users
   said usable models are selected and stored in said memory,
   and, during a real-time process, said usable models are chosen upon detection of the class of user of the current user and used to obtain a ranking of recommended items to be supplied to the current user.

2. The method as in claim 1, wherein dataset partitioning is performed to split data into two separated training and test sets, said potential models being created using the training set.

3. The method as in claim 2, wherein said test set of data is used for tuning and evaluating candidate models.

4. The method as in claim 2 o 3, wherein partitioning includes the steps of splitting the users of the URM into k separate folds, each containing one k-th of the total number of users in the URM.

5. The method as in claim 4, wherein the evaluation task is executed k times, each one with a different fold used as a test set.

6. The method as in claim 4, wherein said test set of data is used to compute two metrics whose trade-off gives a measure of the quality of said potential model.

7. The method as in claim 6, wherein the two metrics are recall and specificity.

8. The method as in claim 7, wherein for each iteration of the k-fold cross-evaluation

   - the model is built using the training set
   - for each user u of the test set with a profile comprising at least two rated items and for each item i rated by the user u

     a. item i is temporarily taken off the current profile,
     b. a recommended list L is generated using the potential model,
     c. list L is sorted in descending order of predicted rating and position of the item i in the list L is considered,
     d. threshold value is determined equal to N and

   if p≤N and i is a liked item, the recall metric is increased,
   if p≥N and i is a non-liked item, the specificity metric is increased.

**9.** The method as in claim 8, wherein N is lesser than 10.

**10.** The method as in claim 9, wherein N=5.

**11.** The method as in any one of claims 7 to 10, wherein an aggregate metric is calculated:

$$\text{f-measure} = 2\text{recall}/[\text{recall} + (1 - \text{specificity})\ c + 1]$$

where c is a constant representing the importance of specificity versus recall, the higher the f-measure the higher is the quality of said potential model.

**12.** The method as in any one of the preceding claims, wherein during real-time process the following steps are performed

- user analysis of the detected user, to identify the profile class of the detected user,
- selection of one model, amongst the usable models, based on the profile class of the user,
- generating the recommended item list by said one model and showing it to the user through display means.

**13.** The method as in any one of the preceding claims, wherein each class of users in based on user profiles, which profiles are built at least on implicit rating of users, represented by a binary classification, the positive rating being allotted a constant value in the possible rating scale which is different from the end values of the scale.

**14.** The method as in 13, wherein explicit ratings from users are used for training a user behaviour analysis through which said user profile is inferred based on implicit rating.

**15.** A system for providing a recommendation to a user amongst a plurality of items, comprising:

a computer system having a memory for collecting and storing at least content data of the items and user data;
a detecting device for detecting the current user profile and providing said computer system with the user profile;
a processor apt to process said content data and user data according to the user profile and to supply to the current user a ranking of preference of said items, **characterized in that**
said content data and user data are stored as a dataset made up of content data of the item (ICM), user data and ratings (URM);
said processor is able to process said dataset in said memory during a batch process to calculate and store a plurality of usable models construed, from candidate models representing different recommendation models, on the basis of a dataset analysis and partitioning, and then tuned and evaluated in correspondence of a plurality of class of users resulting in a usable model for each of the class of users, and
said processor being able to make access to said memory, during a real time process, to pick up one of usable models according to the detected current user profile and to use it to obtain a ranking of recommended items and supply said recommended items to display means.

**Fig. 1**

Batch input

- Content data (ICM)
- User data
- Ratings (URM)

Dataset

Batch Process

Real-Time Process

Recommender Repository

BATCH — REAL-TIME

IPTV interface

- Web services
- Plain HTTP
- EJB

**Fig. 3**

recall

1-specificity

optimal point

random line

**Dataset**

Dataset analysis

Profiles

Dataset partitioning

Test set

Training set

for each Profile

Model Creation

Model Tuning

Model Evaluation

Candidate Models

Best Models

Active User

User analysis

User class

Model selection

Real Time Recom.

Recommended Items

BATCH | REAL-TIME

<u>Fig. 2</u>

Europäisches
Patentamt
European
Patent Office
Office européen
des brevets

**EUROPEAN SEARCH REPORT**

Application Number

EP 08 16 1681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GEORGE LEKAKOS ET AL: "A hybrid approach for improving predictive accuracy of collaborative filtering algorithms" USER MODELING AND USER-ADAPTED INTERACTION, KLUWER ACADEMIC PUBLISHERS, DO, vol. 17, no. 1-2, 25 January 2007 (2007-01-25), pages 5-40, XP019485040 ISSN: 1573-1391 * pages 5-12 * * pages 30-37 * | 1-15 | INV. G06Q30/00 |
| X | GEORGE LEKAKOS ET AL: "A hybrid approach for movie recommendation" MULTIMEDIA TOOLS AND APPLICATIONS, KLUWER ACADEMIC PUBLISHERS, BO, vol. 36, no. 1-2, 21 December 2006 (2006-12-21), pages 55-70, XP019555262 ISSN: 1573-7721 * the whole document * | 1-15 | |
| X | YING GAO ET AL: "A Recommendation Algorithm Combining User Grade-Based Collaborative Filtering and Probabilistic Relational Models" FUZZY SYSTEMS AND KNOWLEDGE DISCOVERY, 2007. FSKD 2007. FOURTH INTERNATIONAL CONFERENCE ON, IEEE, PISCATAWAY, NJ, USA, 1 August 2007 (2007-08-01), pages 67-71, XP031192374 ISBN: 978-0-7695-2874-8 * the whole document *<br>-/-- | 1-15 | TECHNICAL FIELDS SEARCHED (IPC)<br><br>G06Q |

The present search report has been drawn up for all claims

| Place of search | Date of completion of the search | Examiner |
|---|---|---|
| The Hague | 5 December 2008 | De Smet, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 08 16 1681

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/078849 A1 (SLOTHOUBER LOUIS P [US]) 5 April 2007 (2007-04-05)<br>* abstract *<br>* page 1, paragraph 1-6 *<br>* page 3, paragraph 49-52 *<br>* page 4, paragraphs 54,68,70 *<br>* page 5, paragraphs 72,74-76,78 *<br>----- | 1,15 | |
| A | WO 01/45408 A (KONINKL PHILIPS ELECTRONICS NV [NL]) 21 June 2001 (2001-06-21)<br>* abstract *<br>* page 1, line 1 - page 5, line 6 *<br>----- | 1,15 | |

TECHNICAL FIELDS
SEARCHED      (IPC)

The present search report has been drawn up for all claims

| Place of search | Date of completion of the search | Examiner |
|---|---|---|
| The Hague | 5 December 2008 | De Smet, Michaël |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 08 16 1681

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2008

| Patent document cited in search report | | Publication date | Patent family member(s) | | Publication date |
|---|---|---|---|---|---|
| US 2007078849 | A1 | 05-04-2007 | NONE | | |
| WO 0145408 | A | 21-06-2001 | CN | 1347618 A | 01-05-2002 |
| | | | EP | 1155571 A1 | 21-11-2001 |
| | | | JP | 2003517793 T | 27-05-2003 |
| | | | US | 6727914 B1 | 27-04-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Unifying user-based and item-based collaborative filtering approaches by similarity fusion. **Jun Wang ; Arjen P. de Vries ; Marcel J. T. Reinders.** SIGIR '06: Proceedings of the 29th annual international ACM SIGIR conference on Research and development in information retrieval. ACM Press, 2006, 501-508

- Information retrieval using a singular value decomposition model of latent semantic structure. **G. W. Furnas ; S. Deerwester ; S. T. Dumais ; T. K. Landauer ; R. A. Harshman ; L. A. Streeter ; K. E. Lochbaum.** SIGIR '88: Proceedings of the 11th annual international ACM SIGIR conference on Research and development in information retrieval. ACM Press, 1988, 465-480
- On the use of singular value decomposition for text retrieval. **P. Husbands ; H. Simon ; C. Ding.** Proc. of SIAM Comp. Info. Retrieval Workshop. October 2000